# FASCICULE DE BREVET EUROPEEN

(11) **EP 0 559 781 B1**
(45) Date de publication et mention de la délivrance du brevet: **28.12.1994**
(21) Numéro de dépôt: 92901372.0
(22) Date de dépôt: 29.11.1991
(51) Int. Cl.: G03B 21/10, G03B 21/30

(54) **SYSTEME DE VISUALISATION PAR RETROPROJECTION ET PROCEDE DE REALISATION D'UN MIROIR DE RETROPROJECTION**
ANZEIGEVORRICHTUNG FÜR RÜCKPROJEKTION UND VERFAHREN ZUR HERSTELLUNG EINES RÜCKPROJEKTIONSSPIEGELS
BACKPROJECTING VISUALISATION SYSTEM AND METHOD FOR PRODUCING A BACKPROJECTION MIRROR

(30) Priorité: 30.11.1990 FR 9015018
(43) Date de publication de la demande: 15.09.1993
(73) Titulaire: THOMSON-CSF, 75008 Paris (FR)
(72) Inventeur: KAPLAN, Daniel, F-92045 Paris-La Défense Cédex 67 (FR); LEHUREAU, Jean-Claude, F-92045 Paris-La Défense Cédex 67 (FR)
(74) Mandataire: Guérin, Michel
(86) Numéro de dépôt international: FR9100952
(87) Numéro de publication internationale: WO9209918

(56) Documents cités:
- EP-A- 0 131 988
- DE-A- 3 627 646
- US-A- 3 457 006
- US-A- 3 551 044
- US-A- 4 639 106
- IBM TECHNICAL DISCLOSURE BULLETIN volume 12,No.11,1 April 1970,NEW YORK,US pages 1946-1947;"holographic mirrors and filters

## Description

L'invention concerne un système de visualisation par rétroprojection et notamment un système applicable à la télévision. Elle concerne également un procédé de réalisation d'un miroir de rétroprojection, notamment un miroir holographique.

Les fabricants de systèmes de visualisation d'images de télévision tendent à élargir leurs gammes d'appareils et à offrir aux clients le plus grand choix possible. En matière de dimensions de l'image on essaie d'offrir également toutes les dimensions possibles et notamment des images de grandes dimensions, par exemple de l'ordre de 1 mètre de large.

Les écrans de grandes dimensions ne sont pas envisageables à l'aide de la technique des tubes à rayons cathodiques classiques. Les écrans plats de grandes dimensions, soit à cristaux liquides, soit à tubes à rayons cathodiques, ne sont pas encore viables industriellement.

Actuellement, il n'existe, comme technique envisageable industriellement, que la technique par projection sur écran et la technique par rétroprojection.

La technique par projection directe nécessite un niveau d'éclairement faible de la pièce dans laquelle se fait la projection.

La technique par rétroprojection peut être encombrante en raison des dimensions de l'écran.

L'invention concerne un système de rétroprojection permettant de résoudre le problème de l'encombrement.

L'invention concerne donc un système de visualisation par rétroprojection comprenant un écran de visualisation fonctionnant par transparence et un projecteur d'images affichant des images sur la face arrière de l'écran, caractérisé en ce que :
- l'écran est fixé à un plan fixe et qu'il comporte des moyens permettant de l'écarter de ce plan fixe ou de le rabattre contre ce plan fixe de telle façon qu'il soit toujours parallèle au plan fixe et que son écartement se fasse dans une direction perpendiculaire à ce plan fixe ;
- et que le projecteur est situé en dehors de la zone du plan fixe dans laquelle l'écran peut se rabattre.

Les différents objets et caractéristiques de l'invention apparaîtront plus clairement dans la description qui va suivre et dans les figures qui représentent :
- les figures 1 et 2, un exemple de réalisation simplifié du dispositif de l'invention ;
- les figures 3 et 4, un autre exemple de réalisation simplifié du dispositif de l'invention ;
- les figures 5a et 5b, des moyens de protection du miroir ;
- la figure 6, un exemple de réalisation détaillé du dispositif de l'invention ;
- les figures 7 et 8, un dispositif de commande automatique de la manoeuvre de l'écran selon l'invention ;
- les figures 9 et 10, des exemples de montages intégrés projecteur/écran ;
- les figures 11 et 12, un système de projection permettant d'obtenir deux formats d'images ;
- les figures 13, 14, une variante du système des figures 11 et 12 ;
- la figure 15, un système d'articulation du miroir ;
- la figure 16, un système de projection utilisant un miroir holographique ;
- la figure 17, un exemple de procédé d'enregistrement de l'hologramme du miroir holographique ;
- la figure 18, une vue partielle d'un réseau de stries incorporées à un écran.

Avant de décrire les exemples de réalisation en se référant aux figures, il convient de préciser que ces exemples de réalisation peuvent contenir des caractéristiques qui leur sont propres mais qui ne sont pas forcément essentielles dans le cadre de l'invention.

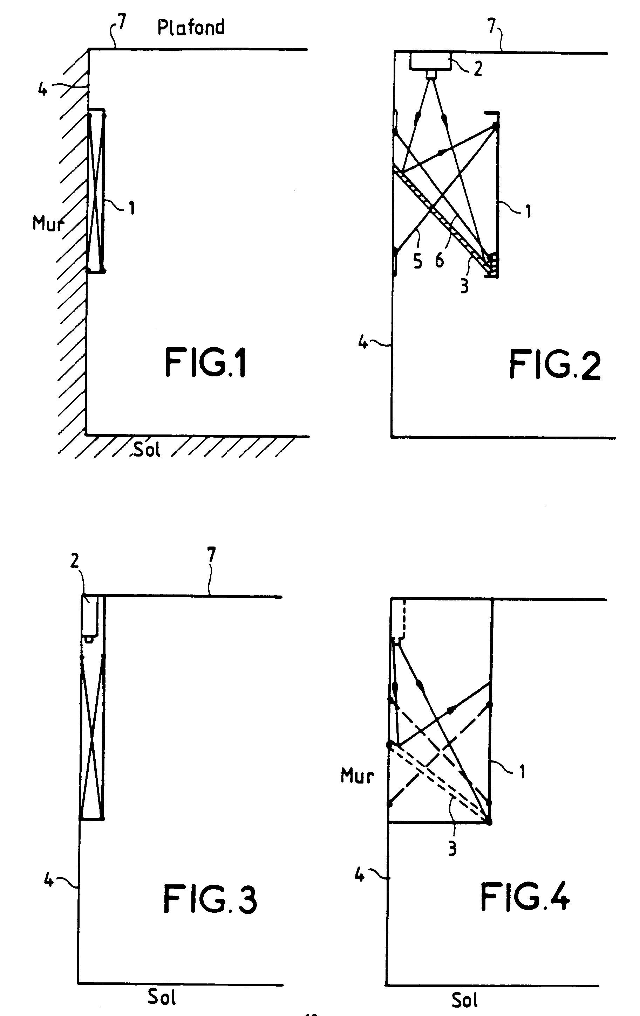

Selon le système de l'invention représenté en figures 1 et 2, l'écran 1 est fixé au mur 4 et comporte un système permettant de le rabattre contre le mur. L'appareil de projection 2 est fixé au plafond 7 au-dessus de l'écran et le faisceau de projection est dirigé verticalement vers un miroir 3 situé sensiblement à 45° entre l'écran et le mur.

Lorsque le système n'est pas utilisé, l'écran 1 est accolé au mur 4 ainsi que le miroir de rétroprojection 3 (figure 1).

Lors d'une visualisation, l'écran est écarté du mur en restant parallèle au mur de façon que le miroir de rétroprojection 3 prenne une position inclinée permettant de réfléchir sur la face arrière de l'écran, le faisceau de projection venant du projecteur 2 (figure 2).

L'invention prévoit donc des dispositifs d'articulation permettant de déplacer l'écran parallèlement au mur et de placer le miroir incliné (par exemple à 45°) sous le projecteur 2.

Ces dispositifs d'articulation comportent, situés sur les côtés latéraux de l'écran 1 de façon à ne pas gêner la transmission du faisceau émis par le projecteur, deux jeux de tringles dont on ne voit que le jeu 5,6 sur la figure 2. Ces tringles sont fixées de manière articulée par leurs extrémités d'une part à l'écran 1 et d'autre part au plan fixe support que constitue le mur 4. Au moins une extrémité de chaque tringle est montée dans une glissière supportée par le mur ou par l'écran de façon à pouvoir coulisser dans une direction parallèle au plan du mur ou celui de l'écran. Dans l'exemple de la figure 2, les deux extrémités des tringles 5 et 6 sont montées dans des glissières portées par le mur et par l'écran. Dans ce cas les deux tringles 5 et 6 peuvent être rendues solidaires par une articulation 50 située en leur milieu ce qui permet d'accroître la rigidité du système.

Lorsque le système n'est pas en service, l'écran peut donc être rabattu contre le mur comme cela est représenté en figure 1.

Les figures 3 et 4 représentent une variante du système des figures 1 et 2 fournissant des dispositions permettant de mettre à l'abri de toute pollution (de la poussière notamment) le miroir, la face arrière de l'écran et le projecteur.

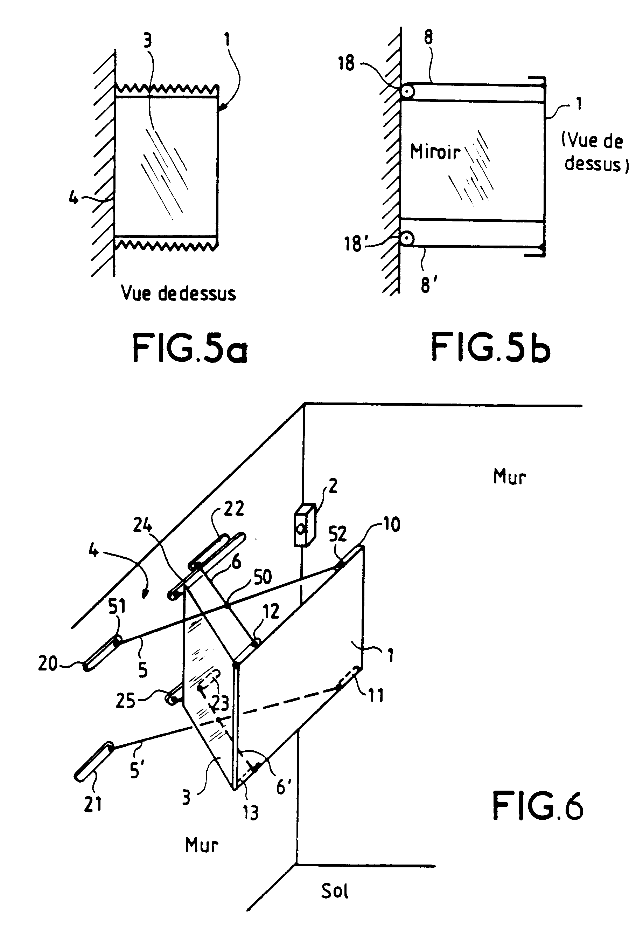

Selon cette variante, l'écran 1 se prolonge jusqu'au plafond 7 et possède, sur les côtés latéraux, des parois repliables 8, 8′ telles que représentées en figures 5a et 5b.

Sur la figure 5a, ces parois sont en forme de soufflets. Lorsque l'écran est rabattu contre le mur ces soufflets sont contenus derrière l'écran.

Sur la figure 5b ces parois sont des toiles de protection latérales montées sur des enrouleurs 18, 18′ du type enrouleur automatique et fixées à l'écran. Ainsi lorsqu'on rabat l'écran contre le mur, les toiles de protection 8, 8′ s'enroulent automatiquement sur les enrouleurs 18 et 18′.

Le projecteur 2 a une forme plane et est disposé sur le mur 4 de telle façon que lorsque l'écran est rabattu sur le mur, il est contenu derrière l'écran.

On voit donc que de telles dispositions permettent de mettre à l'abri de la pollution : le projecteur, la face réfléchissante du miroir 3 et la face arrière de l'écran 1 qui reçoit l'image projetée.

La figure 6 représente un mode de réalisation de l'invention dans lequel le miroir 3 est disposé verticalement. Il est donc articulé sur un côté vertical de l'écran au lieu d'être articulé sur un côté horizontal comme dans la réalisation précédente représentée sur les figures 2 et 4. Le projecteur 2 est alors placé sur le mur 4 de façon à permettre un faisceau de projection orienté horizontalement vers le miroir 3. Un tel mode de réalisation n'a éventuellement pas besoin de dispositions de protection contre la poussière.

Sur la figure 6, on a également représenté des dispositifs à glissières 20, 21, 22, 23 rendues solidaires du mur 4, dans lesquelles coulissent les extrémités des tringles 5, 5′, 6, 6′ telle que l'extrémité 51 dans la glissière 20.

L'écran comporte également sur sa face arrière des glissières 10, 11, 12, 13 dans lesquelles coulissent les autres extrémités de ces tringles telle que l'extrémité 52 de la tringle 5.

Dans une autre variante de réalisation non représentée, il est possible de ne prévoir des glissières qu'à une seule extrémité des tringles, les glissières solidaires du mur par exemple. Dans ce cas, les tringles, au lieu d'être munies d'une articulation telle que l'articulation 50 des tringles 5 et 6 (voir figure 6), doivent être soit libres, soit munies de moyens d'articulation à glissières permettant à l'axe d'articulation de se déplacer le long des tringles selon la position de l'écran.

De plus, le miroir 3 est articulé par l'un de ces côtés sur un bord de l'écran. Des glissières 24, 25 rendues solidaires du mur 4 reçoivent des manetons solidaires du côté du miroir 3 opposé au côté articulé sur l'écran.

En rabattant l'écran contre le mur, les extrémités des tringles coulissent dans leurs glissières, ainsi que les manetons du miroir dans les glissières 24 et 25.

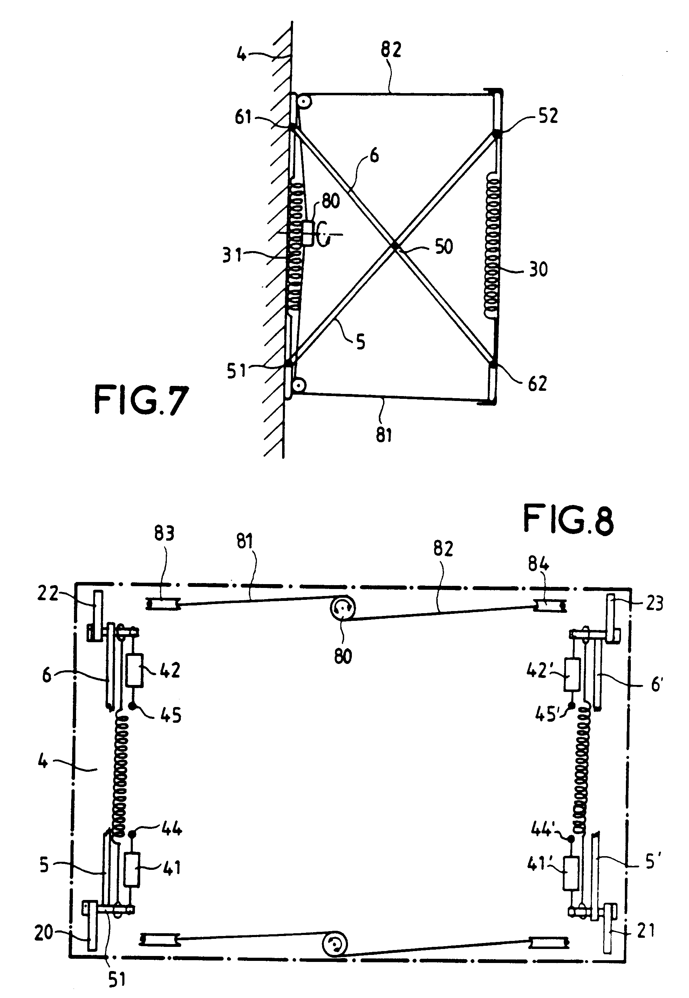

Les figures 7 et 8 représentent un système d'ouverture automatique de l'écran. Selon ce système, les extrémités des tringles sont reliées par des systèmes élastiques (ressorts). Ainsi, comme on peut le voir sur la figure 8, les tringles 5 et 6 d'une part, et 5′ et 6′ d'autre part, sont reliées par des ressorts à leurs extrémités situées à proximité du mur. Il en est de même pour les extrémités des tringles qui coulissent dans des glissières fixées à l'écran.

En position rabattue contre le mur, l'écran peut être maintenu contre le mur par un système de verrouillage (crochets) ou par un système de maintien (aimants).

Pour permettre à l'écran de s'écarter du mur il faut donc débloquer le système de verrouillage ou exercer un effort suffisant pour libérer l'écran à partir du système de maintien de façon que les ressorts entrent en action. Les ressorts tendent alors à rapprocher les extrémités des tringles de telle sorte que l'écran s'écarte du mur.

Pour éviter une détente brutale de l'écran, on prévoit des amortisseurs 41, 42, 41′, 42′ (du type Dashpot par exemple). Ces amortisseurs sont fixés d'une part à une extrémité d'une tringle et d'autre part à un élément fixe (du mur ou de l'écran). Sur la figure 8 on a prévu un amortisseur associé à chaque extrémité des tringles.

La figure 8 représente la commande des extrémités des tringles reliées au mur. La commande des extrémités des tringles peut se faire de la même façon du côté de l'écran.

Il est à noter que selon cet exemple de réalisation on a prévu plusieurs ressorts (2 ressorts sur la figure 8) et un amortisseur par extrémité de tringle, mais il est bien évident qu'on pourrait prévoir un nombre différent de ressorts et d'amortisseurs.

Les figures 7 et 8 représentent par ailleurs un système de câbles permettant de rabattre l'écran contre le mur. Ce système comporte par exemple un ou plusieurs câbles 81, 82 fixés à l'écran par une extrémité et à un tambour d'enroulement 80 solidaire du mur 4 par une autre extrémité. Sur les figures 7 et 8 on a deux câbles 81, 82 renvoyés par des poulies 83, 84 vers un tambour 80.

Ce tambour 80 peut être commandé en rotation par un moteur électrique par exemple.

Lorsque l'écran est écarté du mur, la rotation du tambour 80 a pour effet l'enroulement des câbles 81 et 82 sur le tambour. L'écran se rapproche du mur. Selon une technique connue, lorsque l'écran vient en contact contre le mur, un contact non représenté permet d'éviter la rotation du tambour 80.

Les figures 7 et 8 donnent donc un exemple d'exploitation automatique du système de l'invention.

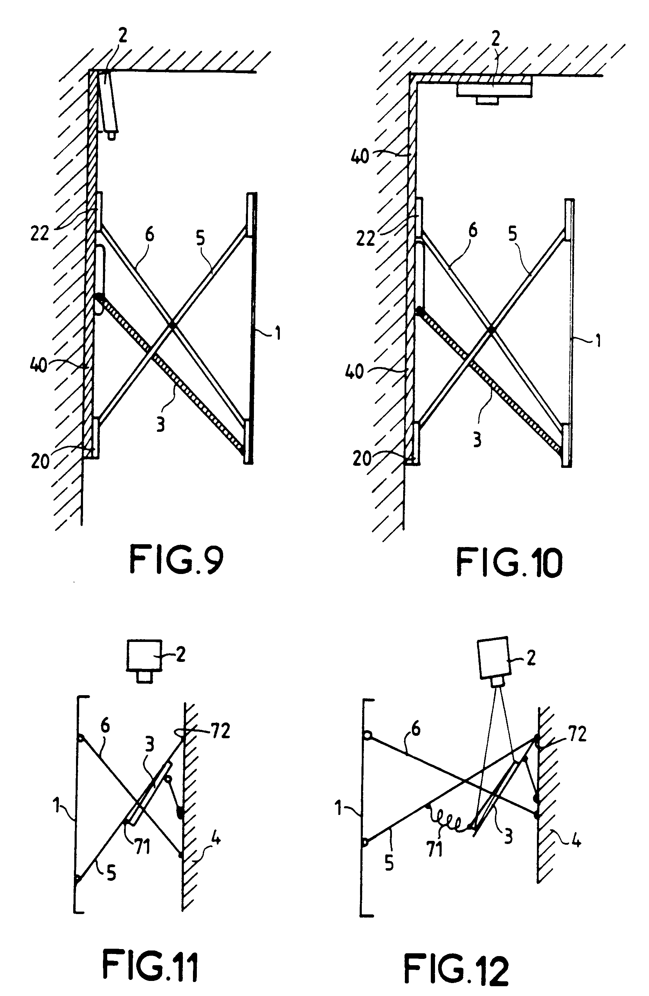

Les figures 9 et 10 représentent des dispositions selon lesquelles, les différents dispositifs de l'écran au lieu d'être fixés sur le mur sont montés sur un cadre de montage 40.

Ce cadre de montage 40 se prolonge vers le plafond et le projecteur 2 est également monté sur ce cadre ce qui évite les problèmes de réglage de position du projecteur (figure 9).

Ce cadre de montage 40 peut être en forme d'équerre (figure 10) de façon à recevoir le projecteur 2 lorsque celui-ci n'est pas à l'angle du mur et du plafond.

Les figures 11 et 12 représentent un système permettant une translation de l'écran en deux étapes :
- au cours d'une première étape, l'écran est écarté du mur dans une position intermédiaire ; le miroir 3 est également écarté du mur et prend une position sensiblement à 45°. Il a, par exemple, un côté relié au mur par une articulation 72 et l'autre côté relié aux tringles 5, 5′, par un système élastique 71 ;
- au cours d'une deuxième étape, l'écran est écarté au maximum du mur. Le miroir 3 ne peut pas s'écarter plus du mur car une tige 70 limite son écartement. Le système élastique 71 (ressort) se tend. Le miroir conserve son inclinaison sensiblement à 45°.

Ce système permet d'avoir au moins trois positions :
1°/ - une position dans laquelle l'écran est rabattu contre le mur et est à encombrement réduit ;
2°/ - au moins une position intermédiaire dans laquelle (figure 11) :
   - l'écran est peu écarté du mur donc peu encombrant ;
   - on obtient une image affichée de dimensions réduites qui n'occupe pas toute la surface de l'écran ;
3°/ - une position à écartement maximal du mur (figure 12) dans laquelle on obtient une image affichée qui occupe toute la surface de l'écran.

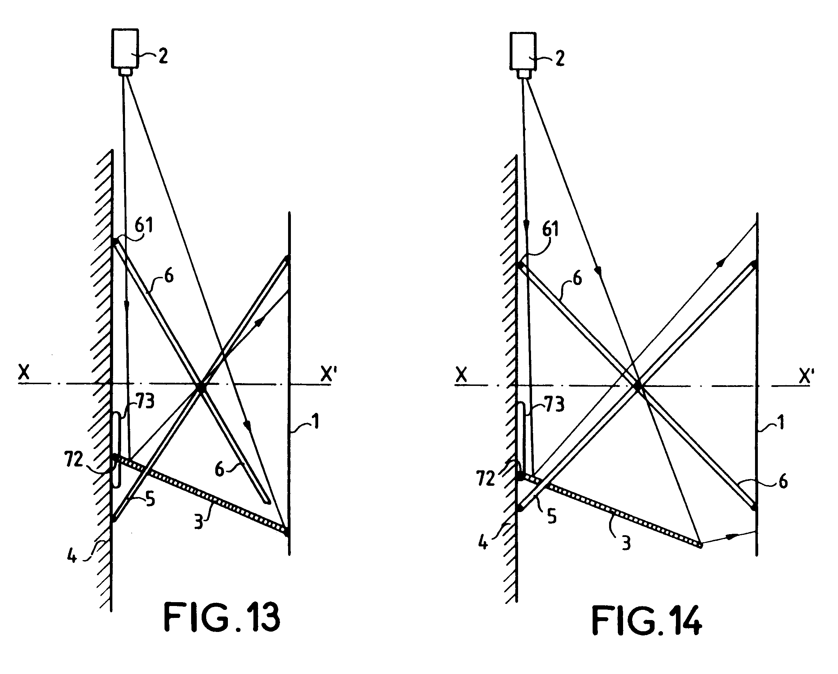

Les figures 13 et 14 représentent une variante de réalisation du système des figures 11 et 12.

L'articulation 72 est montée dans une glissière 73 du même type que les glissières 20 à 23 précédentes.

De plus, l'articulation 72 est reliée à l'extrémité de la tringle solidaire du mur 4 et située le plus près du projecteur ; il s'agit sur les figures 13 et 14, de l'extrémité 61. Ainsi, le déplacement de l'articulation 72 dans la glissière 73 est asservi au déplacement de l'extrémité 61.

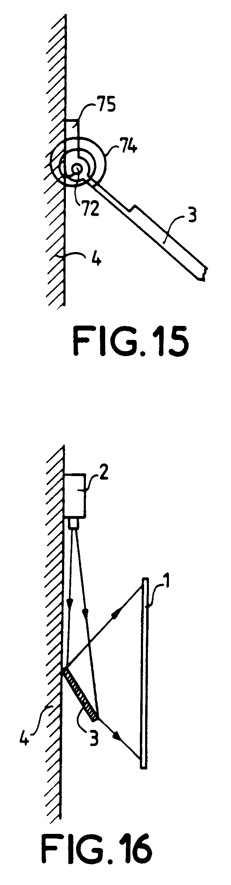

Par ailleurs, sur l'articulation 72 est monté un ressort 74 tel qu'un ressort spiral qui tend à faire tourner le miroir 3 et à lui donner une position oblique par rapport au mur. Pour cela le ressort spiral 74 est fixé à l'articulation par son extrémité centrale et au miroir ou son support par son extrémité périphérique. Une butée 75 solidaire du miroir 3 (ou de son support) permet de limiter l'angle que peut faire le miroir avec le mur 4. La figure 15 représente une vue détaillée du système d'articulation du miroir 3.

Selon l'exemple de réalisation des figures 13 et 14 le miroir 3 est situé entièrement de l'autre côté de l'axe XX′ de l'écran par rapport au projecteur.

Le fonctionnement du système est le suivant :
- Lorsque l'écran est écarté du mur, le miroir se déplace légèrement avec l'extrémité 61, mais surtout, il tourne sous l'effet du ressort 74 jusqu'à atteindre une position telle que représentée en figure 13. L'écran n'est pas écarté au maximum du mur et l'image projetée est de dimensions réduites ;
- Lorsque l'écran est écarté au maximum du mur, le miroir ayant atteint son inclinaison maximale, l'articulation 72 se déplace (vers le bas sur la figure 14) en même temps que l'extrémité 61. L'image projetée est de dimensions maximales.

D'autres positions intermédiaires de déplacements du miroir ou d'orientations du miroir peuvent également être obtenues.

Selon une variante de réalisation du système de l'invention, le miroir 3 est un miroir holographique. Ce miroir a été enregistré de façon à ce que, recevant un faisceau lumineux du projecteur 2, il le réfléchisse sur l'écran 1.

Dans le cas où le faisceau lumineux est trichrome, le matériau constituant le miroir holographique est choisi de façon à réfléchir au moins les trois gammes de longueurs d'ondes correspondant aux trois couleurs fondamentales (bleu, vert, rouge). L'hologramme du miroir holographique est également enregistré de façon à réfléchir un faisceau trichrome.

Si le projecteur 2 est un projecteur à cristal liquide la lumière qu'il émet est un faisceau de lumière polarisée. Sachant qu'un miroir holographique réfléchit la lumière polarisée perpendiculairement à son plan d'incidence, on choisit de préférence, dans le projecteur 2, d'émettre un faisceau polarisé selon cette direction perpendiculaire au plan d'incidence sur le miroir holographique. De plus, dans ce cadre d'application, on peut avoir intérêt d'avoir une inclinaison du miroir à 45° par rapport au faisceau incident.

La réalisation du miroir 3 sous forme d'un miroir holographique présente l'avantage qu'il peut fonctionner non seulement en miroir plan mais aussi en miroir divergent. Comme cela est représenté en figure 16, cela permet de pouvoir obtenir une image de grandes dimensions avec un écran relativement peu écarté du mur.

Dans le cas où l'axe optique du système, plus précisément l'axe du faisceau réfléchi par le miroir holographique 3 n'est pas perpendiculaire à l'écran 1, comme cela est le cas dans les figures 13 et 14, il peut y avoir une déformation de l'image projetée. L'invention prévoit donc des dispositions pour remédier à cette déformation. Principalement, on prévoit d'enregistrer l'hologramme de façon à ce que ce soit le miroir holographique qui réfléchisse le faisceau de façon à corriger les déformations.

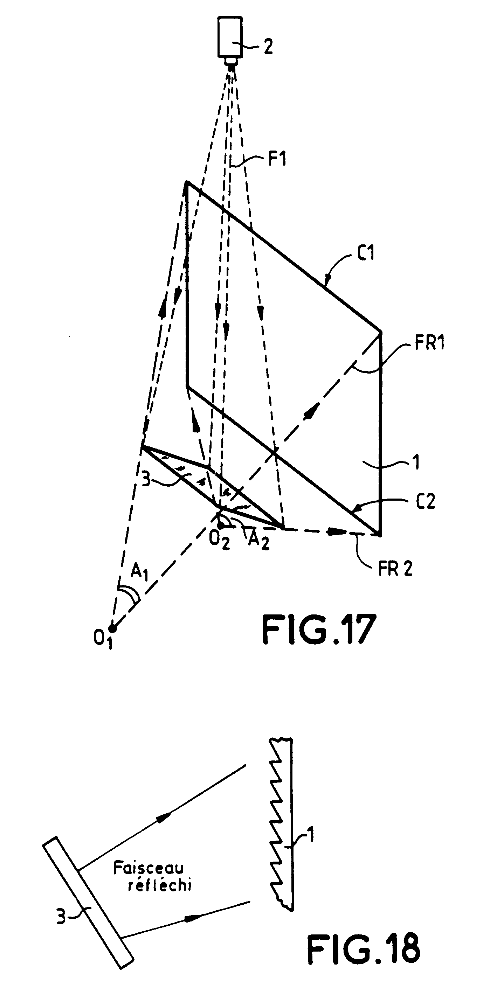

La figure 17 représente un exemple de configuration pouvant donner lieu à déformations de l'image projetée sur l'écran 1. Comme on peut le voir sur cette figure, le miroir 3 doit réfléchir sur l'écran 1 un faisceau provenant du projecteur 2. Il est visible sur cette figure que la position du miroir par rapport à l'écran 1 est telle que l'axe du faisceau réfléchi n'est pas perpendiculaire au plan de l'écran. Dans ces conditions, sans précautions particulières, une image de forme rectangulaire, véhiculée par le faisceau F1, aura sur l'écran une forme trapézoïdale, c'est-à-dire plus large à la partie supérieure de l'écran et plus étroite à la partie inférieure (selon la configuration de la figure 17).

Pour y remédier, il est impératif que le miroir 3 réfléchisse un faisceau tel que la dimension du faisceau éclairant le côté supérieur C1 de l'écran soit égale à la dimension du faisceau éclairant le côté inférieur C2 de l'écran. Si on considère un faisceau de forme plane FR₁ éclairant le côté supérieur C1 de l'écran et un faisceau de forme plane FR₂ éclairant le côté inférieur le côté inférieur C2 de l'écran, ces deux faisceaux ont des angles d'ouvertures A₁ et A₂ différents.

Les rayons extérieurs des faisceaux FR₁ et FR₂ concourent respectivement en des points 0₁ et 0₂ et les faisceaux FR₁ et FR₂ semblent issus de ces points.

Les autres faisceaux intermédiaires éclairant chacun une ligne horizontale de l'écran semblent issus chacun d'un point situé sur la ligne 0₁ - 0₂.

Selon l'invention, on prévoit d'enregistrer l'hologramme du miroir holographique par interférence à l'aide d'un faisceau tel que F1 et d'un faisceau fourni par une lentille cylindrique orientée parallèlement à la droite 0₁ et 0₂.

Dans le cas de la figure 17, il convient de plus que la lentille cylindrique soit éclairée par un faisceau divergent d'une source linéaire parallèle au plan de l'hologramme (miroir 3) à enregistrer.

Une autre façon d'enregistrer l'hologramme peut être de l'enregistrer ligne d'image par ligne d'image. Dans le cas d'une image de télévision, l'image est constituée de lignes. A une ligne de l'image à projeter par le projecteur 2 doit correspondre une ligne sur le miroir 3 et une ligne sur l'écran 1. Pour l'enregistrement on prévoit de faire interférer pour chaque ligne du miroir un faisceau de ligne supposé provenir du projecteur et un faisceau provenant d'un point de la droite 0₁ 0₂ (ou concourant sur la ligne 0₁ 0₂).

Selon une autre méthode, on peut également enregistrer l'hologramme zone par zone. Une zone sera par exemple un élément image. A un élément d'image à projeter doit correspondre un élément du miroir et donc un élément de l'écran. Une telle méthode d'enregistrement permet de corriger toute déformation supposée de l'image. En effet, selon cette méthode, on connaît la position du miroir 3 par rapport à l'écran 1 et on connaît donc la direction de chaque faisceau réfléchi véhiculant un élément d'image (pixel) vers l'écran 1.

Pour l'enregistrement de l'hologramme on fait donc interférer un faisceau d'élément image appartenant au faisceau F1 avec un faisceau de référence provenant d'une source telle que 0₁ ou 0₂ et cela successivement (ou simultanément) pour chaque élément d'image.

Selon l'invention, lorsque le faisceau réfléchi par le miroir 3 n'est pas perpendiculaire au plan de l'écran 1, on prévoit dans l'écran un réseau de stries présentant des faces sensiblement perpendiculaires à la direction du faisceau réfléchi comme cela est représenté partiellement en figure 18.

Il est bien évident que la description qui précède n'a été donnée qu'à titre d'exemple et que d'autres variantes peuvent être envisagées sans sortir du cadre de l'invention. Notamment les types d'articulations décrits ainsi que les modes d'enregistrement du miroir holographique n'ont été fournis que pour illustrer la description.

## Revendications

1. Système de visualisation par rétroprojection comprenant un écran de visualisation fonctionnant par transparence (1) et un projecteur d'images (2) affichant des images sur la face arrière de l'écran, caractérisé en ce que :
- l'écran est fixé à un plan fixe (4) et qu'il comporte des moyens permettant de l'écarter de ce plan fixe ou de le rabattre contre ce plan fixe de telle façon qu'il soit toujours parallèle au plan fixe et que son écartement se fasse dans une direction perpendiculaire à ce plan fixe ;
- et que le projecteur (2) est situé en dehors de la zone du plan fixe dans laquelle l'écran peut se rabattre.

2. Système de visualisation selon la revendication 1, caractérisé en ce que le projecteur (2) éclaire la face arrière de l'écran (1) par l'intermédiaire d'un miroir de renvoi (3) lequel possède des moyens permettant de le rabattre contre le plan fixe (4).

3. Système de visualisation selon la revendication 2, caractérisé en ce que le miroir de renvoi (3) est un miroir holographique.

4. Système de visualisation selon la revendication 2, caractérisé en ce que :
- les moyens permettant de rabattre l'écran contre le plan fixe (4) comportent un premier système de tringles (5, 6) reliant de manière articulée un premier côté de l'écran au plan fixe (4) et un deuxième système de tringles (5′, 6′) analogue au précédent et reliant un deuxième côté de l'écran, opposé au premier, au plan fixe (4) ;
- le miroir de renvoi 3 est relié de manière articulée d'une part à l'écran (1) et d'autre part au plan fixe (4).

5. Système selon la revendication 4, caractérisé en ce que les tringles comportent chacune une première extrémité (51) comportant un élément coulissant dans une première glissière (20) solidaire soit du plan fixe (4), soit de l'écran (1).

6. Système selon la revendication 5, caractérisé en ce que la première glissière est solidaire du plan fixe (4) et que la deuxième extrémité (52) de chaque tringle (5) comporte un élément coulissant dans une deuxième glissière (10) solidaire de l'écran (1).

7. Système selon la revendication 4, caractérisé en ce qu'il comporte au moins un système élastique reliant les deux tringles d'un système de tringles, ce système élastique ayant pour objet de faire ce rapprocher les deux tringles de façon à provoquer l'écartement de l'écran par rapport au plan fixe (4).

8. Système selon la revendication 4, caractérisé en ce qu'il comporte au moins un amortisseur relié d'une part à une tringle et d'autre part soit au plan fixe (4), soit à l'écran (1) de façon à réguler le déplacement de l'écran.

9. Système selon la revendication 1, caractérisé en ce qu'il comporte un moyen de verrouillage maintenant l'écran en position rabattue contre le plan fixe (4).

10. Système selon la revendication 1, caractérisé en ce qu'il comporte au moins un câble (81, 82) possédant une première extrémité fixée soit à l'écran (1), soit au plan fixe (4) et une deuxième extrémité fixée à un tambour d'enroulement (80) solidaire, soit du plan fixe (4), soit de l'écran (1).

11. Système selon la revendication 10, caractérisé en ce que le tambour (80) est commandé par un moteur électrique.

12. Système selon la revendication 3, caractérisé en ce que le miroir holographique fonctionne en miroir divergent.

13. Système selon la revendication 3, caractérisé en ce que le miroir holographique comporte un hologramme permettant de corriger des déformations de projection sur l'écran (1).

14. Système selon la revendication 3, caractérisé en ce que l'écran (1) comporte un réseau de stries.

15. Procédé de réalisation selon la revendication 13, caractérisé en ce qu'un hologramme est enregistré à l'aide d'un faisceau ayant la même direction que celle du faisceau du projecteur (2) par rapport au plan du miroir holographique et à l'aide d'un faisceau transmis par une lentille cylindrique inclinée par rapport au plan du miroir holographique.

16. Procédé de réalisation selon la revendication 13, caractérisé en ce qu'un hologramme est enregistré zone par zone, à l'aide d'un faisceau ayant même direction que le faisceau du projecteur (2) par rapport au plan du miroir holographique et éclairant une zone du miroir holographique, et à l'aide d'un faisceau éclairant la même zone du miroir holographique selon une direction par rapport au plan du miroir telle qu'elle conduise vers une zone analogue de l'écran (1).

17. Système selon la revendication 1, caractérisé en ce que l'écran (1) est un écran de visualisation de télévision de grandes dimensions.

## Patentansprüche

1. System zur Anzeige durch Rückprojektion, mit einem mit Durchlicht arbeitenden Anzeigebildschirm (1) sowie einem Bildprojektor (2), der Bilder auf die Rückseite des Bildschirmes wirft, dadurch gekennzeichnet, daß
- der Bildschirm an einer feststehenden Fläche (4) befestigt ist und Mittel aufweist, die ermöglichen, ihn von dieser feststehenden Fläche zu entfernen oder ihn an diese feststehende Fläche anzulegen, so daß er jederzeit parallel zu der feststehenden Ebene ist und sich in einer zu dieser feststehenden Fläche senkrechten Richtung von dieser entfernt;
- der Projektor (2) außerhalb des Bereichs der feststehenden Fläche angeordnet ist, an den sich der Bildschirm anlegen kann.

2. Anzeigesystem nach Anspruch 1, dadurch gekennzeichnet, daß der Projektor (2) die hintere Seite des Bildschirmes (1) mittels eines Umlenkspiegels (3) beleuchtet, welcher Mittel aufweist, die ermöglichen, ihn an die feststehende Fläche (4) anzulegen.

3. Anzeigesystem nach Anspruch 2, dadurch gekennzeichnet, daß der Umlenkspiegel (3) ein holographischer Spiegel ist.

4. Anzeigesystem nach Anspruch 2, dadurch gekennzeichnet, daß:
- die Mittel, die das Anlegen des Bildschirmes an die ebene Fläche (4) ermöglichen, ein erstes Stangensystem (5, 6) aufweisen, das in gelenkiger Weise eine erste Seite des Bildschirmes mit der feststehenden Fläche (4) verbindet, sowie ein zweites Stangensystem (5′, 6′), welches dem vorgenannten Stangensystem entspricht und eine zu der ersten Seite des Bildschirmes entgegengesetzte zweite Seite mit der feststehenden Fläche (4) verbindet;
- der Umlenkspiegel (3) in gelenkiger Weise einerseits mit dem Bildschirm (1) und andererseits mit der feststehenden Ebene (4) verbunden ist.

5. System nach Anspruch 4, dadurch gekennzeichnet, daß die Stangen jeweils ein erstes Ende (51) aufweisen, das ein Element enthält, welches in einer ersten Führung (20) gleitet, die entweder mit der feststehenden Fläche (4) oder dem Bildschirm (1) fest verbunden ist.

6. System nach Anspruch 5, dadurch gekennzeichnet, daß die erste Führung fest mit der feststehenden Fläche (4) verbunden ist und daß das zweite Ende (52) jeder Stange (5) ein Element aufweist, welches in einer fest mit dem Bildschirm (1) verbundenen zweiten Führung (10) gleitet.

7. System nach Anspruch 4, dadurch gekennzeichnet, daß es wenigstens ein federndes System enthält, welches die beiden Stangen eines Stangensystems miteinander verbindet, wobei dieses federnde System die Aufgabe hat, die beiden Stangen so aufeinander zuzubewegen, daß ein Entfernen des Bildschirmes von der feststehenden Fläche (4) hervorgerufen wird.

8. System nach Anspruch 4, dadurch gekennzeichnet, daß es wenigstens eine Dämpfungsvorrichtung aufweist, die einerseits mit einer Stange und andererseits entweder mit der feststehenden Fläche (4) oder dem Bildschirm (1) verbunden ist, um die Verstellung des Bildschirmes zu regulieren.

9. System nach Anspruch 1, dadurch gekennzeichnet, daß es wenigstens ein Verriegelungsmittel enthält, welches den Bildschirm in der an die feststehende Fläche (4) angelegten Stellung hält.

10. System nach Anspruch 1, dadurch gekennzeichnet, daß es wenigstens ein Kabel (81, 82) enthält, welches ein erstes, entweder an dem Bildschirm (1) oder der feststehenden Fläche (4) befestigtes Ende sowie ein zweites Ende besitzt, das an einer Aufwickeltrommel (80) befestigt ist, die entweder mit der feststehenden Fläche (4) oder dem Bildschirm (1) fest verbunden ist.

11. System nach Anspruch 10, dadurch gekennzeichnet, daß die Trommel von einem Elektromotor gesteuert ist.

12. System nach Anspruch 3, dadurch gekennzeichnet, daß der holographische Spiegel als Divergenzspiegel wirkt.

13. System nach Anspruch 3, dadurch gekennzeichnet, daß der holographische Spiegel ein Hologramm aufweist, welches das Korrigieren von Projektionsverzerrungen auf dem Bildschirm (1) ermöglicht.

14. System nach Anspruch 3, dadurch gekennzeichnet, daß der Bildschirm (1) ein Gitter aus Rillen aufweist.

15. Herstellungsverfahren nach Anspruch 13, dadurch gekennzeichnet, daß ein Hologramm mit Hilfe eines Bündels eingeschrieben wird, das bezüglich der Ebene des holographischen Spiegels die gleiche Richtung wie das Bündel des Projektors (2) besitzt, sowie mit Hilfe eines Bündels, das von einer zylindrischen Linse übertragen wird, die bezüglich der Ebene des holographischen Spiegels geneigt ist.

16. Herstellungsverfahren nach Anspruch 13, dadurch gekennzeichnet, daß ein Hologramm abschnittsweise mit Hilfe eines Bündels eingeschrieben wird, das bezüglich der Ebene des holographischen Spiegels die gleiche Richtung wie das Bündel des Projektors (2) aufweist und einen Abschnitt des holographischen Spiegels belichtet, sowie mit Hilfe eines Bündels, das den gleichen Abschnitt des holographischen Spiegels bezüglich der Ebene des Spiegels in einer Richtung belichtet, die zu einem entsprechenden Abschnitt des Bildschirms (1) führt.

17. System nach Anspruch 1, dadurch gekennzeichnet, daß der Bildschirm (1) ein Fernsehbildschirm mit großen Abmessungen ist.

## Claims

1. Back-projection display system using a display screen (1) working in transparency and an image projector (2) setting up images on the rear face of the screen, characterized in that:
- the screen is fixed to a fixed plane (4) and in that it includes means allowing it to be separated from this fixed plane or folded back against this fixed plane so that it is always parallel to the fixed plane and so that its separation always takes place in a direction perpendicular to this fixed plane;
- and that the projector (2) is located outside that region of the fixed plane into which the screen can be folded back.

2. Display system according to Claim 1, characterized in that the projector (2) illuminates the rear face of the screen (1) via a deflecting mirror (3) which has means allowing it to be folded back against the fixed plane (4).

3. Display system according to Claim 2, characterized in that the deflecting mirror (3) is a holographic mirror.

4. Display system according to Claim 2, characterized in that:
- the means allowing the screen to be folded back against the fixed plane (4) include a first system of connecting rods (5, 6) articulatedly joining a first side of the screen to the fixed plane (4) and a second system of connecting rods (5′, 6′), similar to the former and joining a second side of the screen, opposite the first side, to the fixed plane (4);
- the deflecting mirror (3) is joined articulatedly, on the one hand, to the screen (1) and, on the other hand, to the fixed plane (4).

5. System according to Claim 4, characterized in that the connecting rods each include a first end (51) including a component sliding in a first slideway (20) solidly attached either to the fixed plane (4) or to the screen (1).

6. System according to Claim 5, characterized in that the first slideway is solidly attached to the fixed plane (4) and in that the second end (52) of each connecting rod (5) includes a component sliding in a second slideway (10) which is solidly attached to the screen (1).

7. System according to Claim 4, characterized in that it includes at least one elastic system joining the two connecting rods of one system of connecting rods, this elastic system having the purpose of bringing together the two connecting rods so as to cause separation of the screen with respect to the fixed frame (4).

8. System according to Claim 8, characterized in that it includes at least one damper joined, on the one hand, to a connecting rod and, on the other hand, either to the fixed plane (4) or to the screen (1) so as to regulate the movement of the screen.

9. System according to Claim 1, characterized in that it includes a locking means holding the screen in a position in which it is folded back against the fixed frame (4).

10. System according to Claim 1, characterized in that it includes at least one cable (81, 82) having a first end fixed either to the screen (1) or to the fixed plane (4) and a second end fixed to a winding drum (80) solidly attached either to the fixed plane (4) or to the screen (1).

11. System according to Claim 10, characterized in that the drum (80) is controlled by an electric motor.

12. System according to Claim 3, characterized in that the holographic mirror functions as a divergent mirror.

13. System according to Claim 3, characterized in that the holographic mirror includes a hologram making it possible to correct deformations in projection on to the screen (1).

14. System according to Claim 3, characterized in that the screen (1) includes a network of striae.

15. Production method according to Claim 13, characterized in that a hologram is recorded using a beam having the same direction as the beam from the projector (2) with respect to the plane of the holographic mirror and using a beam transmitted by a cylindrical lens which is inclined with respect to the plane of the holographic mirror.

16. Production method according to Claim 13, characterized in that a hologram is recorded, zone by zone, using a beam having the same direction as the beam from the projector (2) with respect to the plane of the holographic mirror and illuminating a zone of the holographic mirror, and using a beam illuminating the same zone of the holographic mirror with a direction with respect to the plane of the mirror such that it leads towards a similar zone of the screen (1).

17. System according to Claim 1, characterized in that the screen (1) is a large-dimension television display screen.
